# EUROPEAN PATENT SPECIFICATION

(11) **EP 2 955 064 B1**
(45) Date of publication and mention of the grant of the patent: **07.08.2019**
(21) Application number: 14425072.7
(22) Date of filing: 13.06.2014
(51) Int. Cl.: B60R 1/00, B60J 1/00

(54) **Window pane**
Fensterscheibe
Vitre

(43) Date of publication of application: 16.12.2015
(73) Proprietor: Isoclima S.p.A., 35042 Este (Padova) (IT)
(72) Inventor: Bertolini, Alberto, 35042 Este (IT)
(74) Representative: Seitz, Ralf Hans Frank

(56) References cited:
- EP-A2- 1 849 636
- DE-A1- 10 043 026
- DE-A1- 10 332 956
- US-A1- 2005 084 659
- US-A1- 2006 209 551
- US-A1- 2011 025 584
- US-A1- 2013 113 843

## Description

The present invention refers to a window pane, particularly to a windscreen of a vehicle like a car, according to the preamble of claim 1.

DE 100 43 026 A1 describes a vehicle window module with a laminated bullet resistant glazing.

DE 103 32 956 A1 discloses a capacitive touch sensitive OLED display (Organic Light Emitting Diode) structure on the backside of a glass substrate.

US 2006/209551 A1 describes a light emissive window assembly that has a transparent viewing area and a light emissive area for illuminating the occupant compartment in a car.

EP 1 849 636 A2 discloses a display using an OLED foil that is glued directly on a window element of the window pane in a vehicle. The control electronics of the display are integrated in the foil.

US 2013/0113843 A1 discloses a window pane according to the preamble of claim 1.

US 2011/0025584 A1 describes a light-emitting diode heads-up display (HUD) system for a vehicle. The display system comprises a substantially transparent organic light-emitting diode (OLED) display device coupled to the windshield. The display is adapted to display information to an operator of the vehicle.

US 2005/0084659 A1 describes a head-up display incorporated to a windshield of a motor vehicle. The windshield has inner and outer plies of glass. A transparent organic light emitting device (TOLED) or thin transparent display device is located between such plies to be within the field of vision of the vehicle operator.

Usually, a driver of a car uses substantially a field of vision which is presented by the windscreen of the car to be able to control the car during driving. If the driver has to watch a control panel on a dashboard of the car, then he has to look away from the windscreen to the control panel, and, thus, in this moment, even this moment may be short, he cannot watch the vision field through the windscreen which would reduce the driving safety and could be dangerous.

Thus, the object of the present invention is, inter alia, to provide a window pane, particularly a windscreen, which avoids this safety problem.

This object is solved by the window pane of the invention according to claim 1. Accordingly, the window pane of the invention, particularly a windscreen of a vehicle like a car, comprises at least one thin film electroluminescent electronic display that is optically transparent so that additional information displayed on the thin film electroluminescent electronic display is viewable in superposition to environment light from outside of the window pane. The window pane of the invention comprises at least two transparent sheets each made of glass, plastic material or a vitreous ceramic material, and at least one or several adhesive interlayer(s) between each two sheets to form a laminated compound. The window pane of the invention is a bulletproof windscreen to be used in a car, wherein the windscreen comprises a transparent outer sheet of bullet resistant glass directed to outside of the car, a transparent inner sheet of bullet resistant glass directed to inside of the car, and a first transparent adhesive interlayer, a second transparent adhesive interlayer, a third transparent adhesive interlayer arranged in this sequence between the outer sheet and the inner sheet, wherein the optically transparent thin film electroluminescent electronic display or TASEL display is integrated within a recess or opening of the second adhesive layer provided between the first and third adhesive layers. The window pane of the invention comprises thin film electrically conducting tracks or contacts on a substrate embedded in the adhesive interlayer for coupling the thin film electroluminescent electronic display to a connector.

The window pane of the invention has the remarkable advantage that additional information like the speed of the vehicle can be represented and displayed directly within the vision field of the window pane, for instance, a windscreen, to the driver or co-driver which avoids that the driver has to look away from the windscreen thereby the safety during driving can be enhanced.

The window pane of the invention may be used in any kind of vehicle like civilian and military vehicles, trains, boats, planes, and helicopters.

The electronic display used in the invention may display graphic symbols or uses a matrix pixel system to be able to display arbitrary information contents.

The thin film electroluminescent electronic display used in the window pane of the invention is completely optically transparent. The optically transparent electroluminescent thin film electronic display may have an optically transparent substrate, for instance, a glass sheet, and an optically transparent thin film electroluminescent layered device arranged on the substrate. Further, the optically transparent electronic display may be a TASEL display. The optically transparent electronic display used by the window pane of the invention assists the driver so that he can see enough of the outside environment to be able to drive the vehicle or car and, in addition, information, for instance, from the control board, which is indicated by the electronic display at the same time viewable in superposition on the window pane or windscreen in case this additional information is needed. Consequently, the optical transparent display helps to improve the driving safety of a vehicle. Otherwise, if the transparent thin film display is in an off mode, it does neither reduce nor interfere the vision field of the window pane or windscreen due to the complete transparency of the transparent thin film electronic display or TASEL display.

The transparent thin film electronic display used in the invention may be arranged anywhere on or in the window pane or windscreen which, for instance, includes also positions and locations corresponding to a middle or central position of the window pane or windscreen or to any offset position from this middle position, for instance, a position near a periphery of the window pane of the invention. Further, the optically transparent display may have any dimensions only limited by the whole area of the window pane. The display may only occupy a part of the area of the window pane or windscreen.

The optically transparent thin film electroluminescent electronic display of the window pane of the invention may comprise a fully optically transparent substrate and a fully optically transparent thin film electroluminescent device arranged on the substrate in order to ensure the optically transparency of the electronic display and compactness of window pane. Preferably, the optically transparent electronic display is a TASEL (transparent thin film electroluminescence) display that can be viewed from two sides.

The window pane of the invention comprises at least two transparent sheets each made of glass, plastic material like PC (polycarbonate), or a vitreous ceramic material, for instance, AlON, and at least one or more adhesive interlayer(s) between each two sheets to form a layered compound or laminate. The adhesive interlayer may be of polyvinylbutyral (PVB), a PVB foil, a PU (polyurethane) foil or EVA (ethylene-vinyl acetate) or any kind of cast resin as acrylic or epoxy resin. This construction of the window pane or windscreen of the invention allows also forming a bulletproof or bullet resistant glazing.

The optically transparent electroluminescent thin film electronic embedded in a sheet or adhesive interlayer of the window pane or windscreen. Further, the thin film electroluminescent electronic display may be arranged or accommodated in a recess or opening of a sheet or adhesive interlayer of the window pane of the invention to allow a window unit with integrated electronic display and great compactness.

The window pane or windscreen of the invention may comprise a display controller electrically coupled to the optically transparent electronic display for controlling its display function. Further, the window pane of the invention may comprise a switch for switching on and off the optically transparent electronic display.

Further advantageous and preferred embodiments are mentioned in the dependent claims. Additional objects and advantages, and features of the invention could be derived from the following detailed description and drawings of an exemplified and preferred embodiment of the invention, in which:
- Fig. 1: is a view of a bulletproof windscreen according to a preferred embodiment of the window pane of the invention; and
- Fig. 2: is a schematic sectional partial view of the windscreen according to the embodiment of Fig. 1 with an integrated electronic display in a recess.

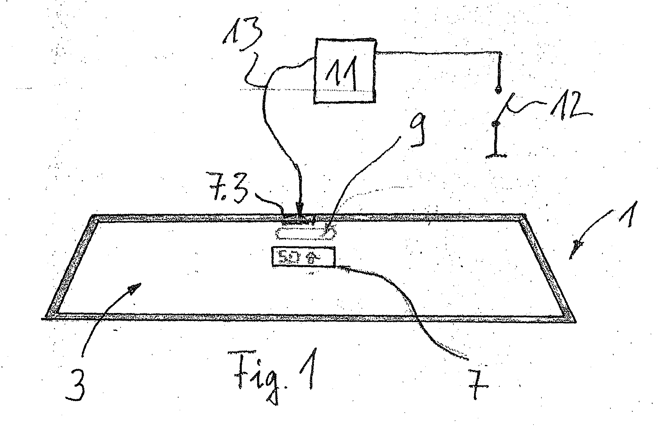

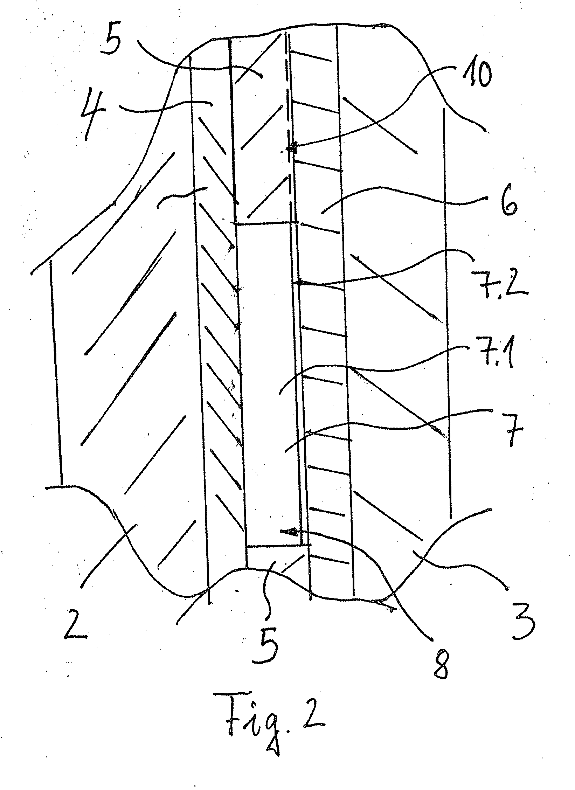

Fig. 1 shows a bulletproof windscreen 1 to be used in a car according to a preferred and exemplified optically transparent window pane of the invention. The windscreen 1 comprises a transparent outer sheet 2 of bullet resistant glass directed to outside of the car, a transparent inner sheet 3 of bullet resistant glass directed to inside of the car as shown in the cross section view of Fig. 2, and a first transparent adhesive interlayer 4, a second transparent adhesive interlayer 5, and a third transparent adhesive interlayer 6 arranged in this sequence between the outer sheet 2 and the inner sheet 3 and each made of PVB foil in order to form a strong compound of the windscreen 1. A completely optically transparent thin film electroluminescent electronic display 7 or TASEL display is integrated within a recess 8 or opening of the second adhesive layer 5 provided between the first and third adhesive layers 4 and 6. The display 7 is arranged underneath a rear mirror 9 fixed to the windscreen 1.

The optically transparent thin film electroluminescent electronic display 7 comprises a fully optically transparent glass substrate 7.1 and a completely optically transparent thin film electroluminescent layered device 7.2 that comprises a layer of transparent column electrodes arranged on the glass substrate 7.2, a transparent electroluminescent phosphor layer arranged between optically transparent dielectric layers, and optically transparent row electrodes extending normal to the column electrodes. The transparent thin film layers of the thin film electroluminescent layered device 7.2 may be produced by using atomic layer deposition on the transparent substrate 7.1. The transparent row and column electrode layers may be arranged in a matrix structure and may be made of indium tin oxide.

If an electrical voltage is applied between a row electrode and a column electrode, a pixel of the phosphor layer is energized to emit light by energizing the electrodes in a controlled manner. Information corresponding to energized pixel pattern could be displayed for instance in yellow color. Thus, the light generated by the electronic display 7 is the light corresponding to the information displayed. Thus, if the electronic display 7 is energized or switched on (on mode), the driver or user can see additional information displayed on the electronic display 7 in addition to the outside environment light through the windscreen 1.

In contrast, if there is no electrical voltage applied on the electrodes of the electronic display 7, which means that the electrodes and, thus, the electronic display 7 is not energized and is switched off (off mode), no light is generated and emitted from the electronic display 7 and, consequently, no additional information can be seen by the driver on the windscreen 1. Since the electronic display 7 is completely optically transparent, the view of the outside environment through the windscreen 1 is then represented to the driver without any additional information displayed by the electronic display 7 and without missing portions in the vision field image due to complete transparency of the electronic display 7.

A thickness of the transparent thin film electroluminescent layered device 7.2 may be ca. 1 µm. A thickness of the glass substrate 7.1 may amount to ca. 1 mm. The adhesive layer 5 may be ca. 1 mm thick and the adhesive layers 4 and 6 may each have a thickness of 0.75 mm. The bullet resistant outer sheet 2 may have a thickness of ca. 5 mm. The bullet resistant inner sheet 3 may have a thickness of ca. 3 mm.

Further, the windscreen 1 comprises an electronic display controller 11 which is coupled to a connector 7.3 of the electronic display 7 or of the windscreen 1 by means of a suitable wiring 13 or cable in order to control the electronic display 7. The connector 7.3 is coupled to the thin film electrodes of the transparent thin film electroluminescent layered device 7.2 via transparent thin film electrically conducting tracks 10 or contacts on a substrate embedded also in the second adhesive interlayer 5.

The windscreen 1 of Fig. 1 provides an electrical switch 12 that is coupled to the display controller 11 and that can be operated by the driver to switch on the electronic display 7 via the display controller 11 in order to display the prescribed information or additional light pattern, or to switch off the electronic display 7 to use the complete viewable area of the windscreen 1. The display controller 11 may be a software supported microprocessor system comprising a display RAM to load and store the display pattern to be displayed by the electronic display 7. If the switch 12 is closed in the on mode the electronic display 7 is energized with the display pattern from the display controller 11, and then, the user can see the additional display information or display pattern on the windscreen 1 together with a substantial part of the outside environment view. If the switch 12 is opened in the off mode the electronic display 7 is not energized, and, then, the driver can only see the full outside environment view. The switch 12 may also be realized as internal switching function within the display controller 11 wherein the switching function may be triggered automatically depending by an external or internal event.

## Claims

1. Window pane, particularly a windscreen (1) of a vehicle like a car, which comprises at least one thin film electroluminescent electronic display (7) that is optically transparent so that additional information displayed on the thin film electroluminescent electronic display (7) is viewable in superposition to environment light from outside of the window pane, **characterized in**
**that** the window pane comprises at least two transparent sheets (2, 3) each made of glass, plastic material or a vitreous ceramic material, and at least one or several adhesive interlayer(s) (4, 5, 6) between each two sheets to form a laminated compound,
**that** the window pane is a bulletproof windscreen (1) to be used in a car, wherein the windscreen comprises a transparent outer sheet (2) of bullet resistant glass directed to outside of the car, a transparent inner sheet (3) of bullet resistant glass directed to inside of the car, and a first transparent adhesive interlayer (4), a second transparent adhesive interlayer (5), a third transparent adhesive interlayer (6) arranged in this sequence between the outer sheet (2) and the inner sheet (3), the optically transparent thin film electroluminescent electronic display (7) or TASEL display is integrated within a recess (8) or opening of the second adhesive layer (5) provided between the first and third adhesive layers (4) and (6); and
**that** the window pane comprises thin film electrically conducting tracks (10) or contacts on a substrate embedded in the adhesive interlayer (5) for coupling the thin film electroluminescent electronic display (7) to a connector (7.3).

2. Window pane according to claim 1, **characterized in that** the optically transparent electroluminescent thin film electronic display (7) comprises an optically transparent substrate (7.1) and an optically transparent thin film electroluminescent layered device (7.2) arranged on the substrate (7.1).

3. Window pane according to claim 2, **characterized in that** the optically transparent substrate (7.1) is made of glass.

4. Window pane according to anyone of the preceding claims, **characterized by** a display controller (11) that is electrically coupled to the thin film electroluminescent electronic display (7) for controlling its display function.

5. Window pane according to anyone of the preceding claims, **characterized by** a switch (12) for switching on and off the thin film electroluminescent electronic display (7).

6. Window pane according to anyone of the preceding claims, **characterized in that** the optically transparent electronic display (7) is a TASEL display.

7. Window pane according to anyone of the preceding claims, **characterized in that** the window pane is bulletproof.

8. Window pane according to one of the preceding claims, **characterized in that** the optically transparent thin film electroluminescent electronic display (7) comprises a optically transparent glass substrate (7.1) and an optically transparent thin film electroluminescent layered device (7.2) that comprises a layer of transparent column electrodes arranged on the glass substrate (7.1), a transparent electroluminescent phosphor layer arranged between optically transparent dielectric layers, and optically transparent row electrodes extending normal to the column electrodes.

9. Window pane according to one of the preceding claims, **characterized by** an electronic display controller (11) that is coupled to the connector (7.3) by means of a suitable wiring (13) or cable in order to control the thin film electroluminescent electronic display (7).

10. Window pane according to claim 9, **characterized in that** the connector (7.3) is coupled to thin film electrodes of the transparent thin film electroluminescent layered device (7.2) via the transparent thin film electrically conducting tracks (10) or contacts.

11. Window pane according to one of the preceding claims, **characterized by** an electrical switch (12) that is coupled to a display controller (11), wherein, if the switch (12) is closed in an on mode, the thin film electroluminescent electronic display (7) is energized with a display pattern from the display controller (11) and the display pattern and a substantial part of the outside environment are viewable in superposition, and, if the switch (12) is opened in the off mode, the thin film electroluminescent electronic display (7) is not energized and only the outside environment is viewable.

## Patentansprüche

1. Fensterscheibe, insbesondere eine Windschutzscheibe (1) eines Fahrzeugs wie zum Beispiel eines Autos, die mindestens eine elektronische Elektrolumineszenz-Dünnfilm-Anzeige (7) aufweist, welche optisch transparent derart ist, dass zusätzliche Informationen, die auf der elektronischen Elektrolumineszenz-Dünnfilm-Anzeige (7) angezeigt werden, in Superposition zu dem Umgebungslicht von außerhalb der Fensterscheibe sichtbar sind, **dadurch gekennzeichnet,**
**dass** die Fensterscheibe mindestens zwei transparente Scheiben (2, 3), die jeweils aus Glas, einem Kunststoffmaterial oder einem glasartigen Keramikmaterial bestehen, und mindestens eine Klebezwischenschicht oder mehrere Klebezwischenschichten (4, 5, 6) zwischen jeweils zwei Scheiben aufweist, um einen geschichteten Verbund auszubilden,
**dass** die Fensterscheibe eine kugelsichere Windschutzscheibe (1) zur Verwendung in einem Auto ist, wobei die Windschutzscheibe eine transparente Außenscheibe (2) aus einem kugelbeständigen Glas, die zur Außenseite des Autos hinweist, eine transparente Innenscheibe (3) aus einem kugelbeständigen Glas, die zur Innenseite des Autos hinweist, und eine erste, transparente Klebezwischenschicht (4), eine zweite, transparente Klebezwischenschicht (5), eine dritte, transparente Klebezwischenschicht (6) aufweist, die in dieser Reihenfolge zwischen der Außenscheibe (2) und der Innenscheibe (3) angeordnet sind, und
wobei die optisch transparente, elektronische Elektrolumineszenz-Dünnfilm-Anzeige (7) oder die TASEL-Anzeige innerhalb einer Aufnahme (8) oder einer Öffnung der zweiten Klebezwischenschicht (5) integriert ist, die zwischen der ersten Klebezwischenschicht (4) und der dritten Klebezwischenschicht (6) vorgesehen ist; und
**dass** die Fensterscheibe elektrisch leitende Dünnfilm-Leitungen (10) oder -Kontakte auf einem Substrat, das in der Klebezwischenschicht (5) eingebettet ist, zum Koppeln der elektronischen Elektrolumineszenz-Dünnfilm-Anzeige (7) mit einem Verbinder (7.3) aufweist.

2. Fensterscheibe nach Anspruch 1, **dadurch gekennzeichnet, dass** die optisch transparente, elektronische Elektrolumineszenz-Dünnfilm-Anzeige (7) ein optisch transparentes Substrat (7.1) und eine optisch transparente, geschichtete Elektrolumineszenz-Dünnfilm-Vorrichtung (7.2) aufweist, die auf dem Substrat (7.1) angeordnet ist.

3. Fensterscheibe nach Anspruch 2, **dadurch gekennzeichnet, dass** das optisch transparente Substrat (7.1) aus Glas besteht.

4. Fensterscheibe nach einem der vorhergehenden Ansprüche, **gekennzeichnet durch** eine Anzeigesteuereinheit (11), die elektrisch mit der elektronischen Elektrolumineszenz-Dünnfilm-Anzeige (7) zum Steuern ihrer Anzeigefunktion gekoppelt ist.

5. Fensterscheibe nach einem der vorhergehenden Ansprüche, **gekennzeichnet durch** einen Schalter (12) zum Ein- und Ausschalten der elektronischen Elektrolumineszenz-Dünnfilm-Anzeige (7).

6. Fensterscheibe nach einem der vorhergehenden Ansprüche, **dadurch gekennzeichnet, dass** die optisch transparente, elektronische Anzeige (7) eine TASEL-Anzeige ist.

7. Fensterscheibe nach einem der vorhergehenden Ansprüche, **dadurch gekennzeichnet, dass** die Fensterscheibe kugelsicher ist.

8. Fensterscheibe nach einem der vorhergehenden Ansprüche, **dadurch gekennzeichnet, dass** die optisch transparente, elektronische Elektrolumineszenz-Dünnfilm-Anzeige (7) ein optisch transparentes Glassubstrat (7.1) und eine optisch transparente, geschichtete Dünnfilm-Elektrolumineszenz-Vorrichtung (7.2) aufweist, die eine Schicht aus transparenten Spaltenelektroden, die auf dem Glassubstrat (7.1) angeordnet ist, eine transparente Elektrolumineszenz-Phosphorschicht, die zwischen optisch transparenten, dielektrischen Schichten angeordnet ist, und optisch transparente Reihenelektroden aufweist, die sich senkrecht zu den Spaltenelektroden erstrecken.

9. Fensterscheibe nach einem der vorhergehenden Ansprüche, **gekennzeichnet durch** eine elektronische Steuereinheit (11) die mit dem Verbinder (7.3) mittels einer geeigneten Verdrahtung (13) oder eines geeigneten Kabels gekoppelt ist, um die elektronische Elektrolumineszenz-Dünnfilm-Anzeige (7) zu steuern.

10. Fensterscheibe nach Anspruch 9, **dadurch gekennzeichnet, dass** der Verbinder (7.3) mit Dünnfilm-Elektroden der transparenten, geschichteten Dünnfilm-Elektrolumineszenz-Vorrichtung (7.2) über die transparenten, elektrisch leitenden Dünnfilm-Leitungen (10) oder -Kontakte gekoppelt ist.

11. Fensterscheibe nach einem der vorhergehenden Ansprüche, **gekennzeichnet durch** einen elektrischen Schalter (12), der mit der Anzeigesteuereinheit (11) gekoppelt ist, wobei, wenn der Schalter (12) in einem EIN-Modus geschlossen ist, die elektronische Dünnfilm-Elektrolumineszenz-Anzeige (7) mit einem Anzeigemuster von der Anzeigesteuereinheit (11) erregt wird, wobei das Anzeigemuster und ein wesentlicher Teil der äußeren Umgebung in Superposition sichtbar sind, und wobei, wenn der Schalter (12) in dem AUS-Modus geöffnet ist, die elektronische Dünnfilm-Elektrolumineszenz-Anzeige (7) nicht erregt wird und nur die äußere Umgebung sichtbar ist.

## Revendications

1. Vitre, en particulier un pare-brise (1) d'un véhicule tel qu'une voiture, qui comprend au moins un dispositif d'affichage électronique électroluminescent en couche mince (7) qui est optiquement transparent de sorte que des informations supplémentaires affichées sur le dispositif d'affichage électronique électroluminescent en couche mince (7) puissent être visualisées de manière superposée à la lumière environnante provenant de l'extérieur de la vitre, **caractérisée en ce que**
la vitre comprend au moins deux feuilles transparentes (2, 3) réalisées chacune en verre, en matière plastique ou en un matériau céramique vitreux et au moins une ou plusieurs couche(s) intermédiaire(s) adhésive(s) (4, 5, 6) entre chaque deux feuilles pour former un composé stratifié,
la vitre est un pare-brise pare-balles (1) à utiliser dans une voiture, dans laquelle le pare-brise comprend une feuille externe transparente (2) en verre résistant aux balles dirigée vers l'extérieur de la voiture, une feuille interne transparente (3) en verre résistant aux balles dirigée vers l'intérieur de la voiture, et une première couche intermédiaire adhésive transparente (4), une deuxième couche intermédiaire adhésive transparente (5), une troisième couche intermédiaire adhésive transparente (6) agencées, dans cet ordre, entre la feuille externe (2) et la feuille interne (3), le dispositif d'affichage électronique électroluminescent en couche mince optiquement transparent (7) ou l'afficheur TASEL est intégré dans un évidement (8) ou une ouverture de la deuxième couche adhésive (5) prévue entre les première (4) et troisième (6) couches adhésives; et
la vitre comprend des pistes conductrices d'électricité ou contacts conducteurs d'électricité (10) en couche mince sur un substrat incorporé dans la couche intermédiaire adhésive (5) pour coupler le dispositif d'affichage électronique électroluminescent en couche mince (7) à un connecteur (7.3).

2. Vitre selon la revendication 1, **caractérisée en ce que** le dispositif d'affichage électronique électroluminescent en couche mince optiquement transparent (7) comprend un substrat optiquement transparent (7.1) et un dispositif en couches électroluminescent en couche mince optiquement transparent (7.2) agencé sur le substrat (7.1).

3. Vitre selon la revendication 2, **caractérisée en ce que** le substrat optiquement transparent (7.1) est réalisé en verre.

4. Vitre selon l'une quelconque des revendications précédentes, **caractérisée par** une unité de commande d'affichage (11) qui est couplée électriquement au dispositif d'affichage électronique électroluminescent en couche mince (7) pour commander sa fonction d'affichage.

5. Vitre selon l'une quelconque des revendications précédentes, **caractérisée par** un interrupteur (12) pour activer et désactiver le dispositif d'affichage électronique électroluminescent en couche mince (7).

6. Vitre selon l'une quelconque des revendications précédentes, **caractérisée en ce que** le dispositif d'affichage électronique optiquement transparent (7) est un afficheur TASEL.

7. Vitre selon l'une quelconque des revendications précédentes, **caractérisée en ce que** la vitre est pare-balles.

8. Vitre selon l'une des revendications précédentes, **caractérisée en ce que** le dispositif d'affichage électronique électroluminescent en couche mince optiquement transparent (7) comprend un substrat de verre optiquement transparent (7.1) et un dispositif en couches électroluminescent en couche mince optiquement transparent (7.2) qui comprend une couche d'électrodes de colonne transparente agencée sur le substrat en verre (7.2), une couche de luminophore électroluminescente transparente agencée entre des couches diélectriques optiquement transparentes, et des électrodes de rangées optiquement transparentes s'étendant perpendiculairement aux électrodes de colonne.

9. Vitre selon l'une des revendications précédentes, **caractérisée par** une unité de commande d'affichage électronique (11) qui est couplé au connecteur (7.3) au moyen d'un câblage (13) ou d'un câble approprié afin de commander le dispositif d'affichage électronique électroluminescent en couche mince (7).

10. Vitre selon la revendication 9, **caractérisée en ce que** le connecteur (7.3) est couplé à des électrodes en couche mince du dispositif en couches électroluminescent en couche mince transparent (7.2) via les pistes conductrices d'électricité ou contacts conducteurs d'électricité en couche mince transparent(e)s (10).

11. Vitre selon l'une des revendications précédentes, **caractérisée par** un interrupteur électrique (12) couplé à une unité de commande d'affichage (11), où, si l'interrupteur (12) est fermé en mode activé, le dispositif d'affichage électronique électroluminescent en couche mince (7) est excité avec un motif d'affichage provenant de l'unité de commande d'affichage (11) et le motif d'affichage et une partie substantielle de l'environnement extérieur peuvent être visualisés de manière superposée, et, si l'interrupteur (12) est ouvert en mode désactivé, le dispositif d'affichage électronique électroluminescent en couche mince (7) n'est pas excité et seul l'environnement extérieur peut être visualisé.
